# EUROPÄISCHE PATENTSCHRIFT

(11) **EP 1 697 674 B1**
(45) Veröffentlichungstag und Bekanntmachung des Hinweises auf die Patenterteilung: **23.05.2007**
(21) Anmeldenummer: 04804924.1
(22) Anmeldetag: 17.12.2004
(51) Int. Cl.: F16L 37/092

(54) **STECKVERBINDER FÜR MEDIENLEITUNGEN**
PLUG CONNECTOR FOR FLUID CONDUITS
RACCORD A EMBOITEMENT POUR CONDUITES DE FLUIDE

(30) Priorität: 23.12.2003 DE 20319959 U
(43) Veröffentlichungstag der Anmeldung: 06.09.2006
(73) Patentinhaber: Voss Automotive GmbH, 51688 Wipperfürth (DE)
(72) Erfinder: HAGEN, Harald, 51688 Wipperfürth (DE); SALOMON-BAHLS, Bernd, 58553 Halver (DE)
(74) Vertreter: Patentanwälte Dr. Solf & Zapf
(86) Internationale Anmeldenummer: PCT/EP2004/053586
(87) Internationale Veröffentlichungsnummer: WO 2005/064221

(56) Entgegenhaltungen:
- EP-A- 0 330 350
- EP-A- 0 733 844
- EP-A- 0 753 698
- US-A1- 2003 178 846
- US-B1- 6 447 019

## Beschreibung

Die vorliegende Erfindung betrifft einen Steckverbinder für Medienleitungen gemäß dem Oberbegriff des Anspruchs 1.

Die EP 0 753 698 B1 beschreibt eine solche dem Oberbegriff des Anspruchs 1 entsprechende Steckverbindung, wobei eine nicht ganz gesteckte, zwar schon arretierte, aber noch nicht korrekt abgedichtete Stellung bemerkbar sein soll, indem über einen Leckagepfad eine Undichtigkeit insbesondere akustisch durch eine Geräuschbildung wahrnehmbar ist. Bei der bekannten Steckverbindung ist der Leckagepfad entweder durch eine besondere Ausbildung der Schmutzdichtung als Lippendichtung mit einer druckbedingt abhebbaren Dichtlippe oder durch eine Durchgangsöffnung des Gehäuseteils gebildet. Um bei der zweiten Möglichkeit zu vermeiden, dass durch die Öffnung Schmutz oder dergleichen Fremdstoffe von außen eindringen können, ist in der Öffnung ein Ventilelement angeordnet, welches nur die Leckageströmung nach außen gestattet und dabei vorzugsweise ein akustisches Pfeifsignal erzeugt.

Die EP 0 330 350 A1 beschreibt einen Steckverbinder mit einem Leckagepfad, der durch eine Vertiefung gebildet ist.

Der vorliegenden Erfindung liegt die Aufgabe zugrunde, einen Steckverbinder der genannten Art weiter zu verbessern und zu vereinfachen.

Gemäß dem Anspruch 1 wird dies dadurch erreicht, dass der Leckagepfad durch auf dem Außenumfang des Einsteckteils angeordnete Vertiefungen gebildet ist, die in der Vorarretierstellung einerseits im Bereich der Mediendichtung und andererseits im Bereich der Schmutzdichtung angeordnet sind. Durch diese Ausgestaltung erübrigt sich eine Öffnung des Gehäuseteils, und als Dichtungen (insbesondere für die Mediendichtung) können einfache und preisgünstige O-Ringe verwendet werden. Die Leckage erfolgt dann in der Vorarretierstellung über die jeweilige Vertiefung des Einsteckteils radial innen und axial an dem die Vertiefung überspannenden Dichtring vorbei. In der ganz gesteckten Vollsteckstellung liegen die Dichtungen dann in Umfangsrichtung vollständig auf zylindrischen Dichtabschnitten des Einsteckteils an.

Es ergibt sich dadurch eine konstruktiv sehr einfache und kostengünstige Ausführung. Dabei ist das Einsteckteil bevorzugt als Formteil aus Kunststoff ausgebildet. Dies ermöglicht eine einfache Einformung der Vertiefungen.

In einer Weiterbildung der Erfindung ist das Gehäuseteil zweiteilig aus einem Basisteil und einem mit diesem über eine Rastverbindung verbundenen Ersatzteil ausgeführt. Diese Zweiteiligkeit ermöglicht eine einfache Montage und Demontage sowie ein Lösen des Einsteckteils. Bevorzugt ist dabei das Basisteil seinerseits ebenfalls zweiteilig aus einem Aufnahmeteil für das Halteelement, die Mediendichtung und das Einsatzteil sowie aus einem Anschlußteil zur Anschlußverbindung des Gehäuseteils an eine Medienleitung ausgebildet. Dadurch kann das Anschlußteil adapterartig in verschiedenen Ausführungen vorgesehen sein, welches dann bevorzugt mit dem stets identisch ausgebildeten Aufnahmeteil verbindbar ist. Somit ist auch der Verbindungsbereich zwischen Aufnahmeteil und Anschlußteil stets identisch ausgebildet. Bevorzugt handelt es sich um eine schnappbare Formschlußverbindung mit insbesondere in Umfangsrichtung geschlossenem Linienverlauf. Zudem ergibt sich dadurch die Möglichkeit, die beiden Teile des Basisteils aus unterschiedlichen Materialien herstellen zu können. Vorzugsweise besteht das Aufnahmeteil aus Kunststoff, während das Anschlußteil aus Metall, insbesondere Messing, besteht.

Weitere bevorzugte Ausgestaltungsmerkmale sind in den abhängigen Ansprüchen sowie auch in der folgenden Beschreibung enthalten.

Anhand von in der Zeichnung veranschaulichten, bevorzugten Ausführungsbeispielen soll die Erfindung genauer erläutert werden. Dabei zeigen:
- Fig. 1: einen Längsschnitt durch einen erfindungsgemäßen Steckverbinder mit Einsteckteil während des Einsteckvorgangs, d. h. in einer noch nicht ganz eingesteckten Stellung,
- Fig. 2: eine Darstellung analog zu Fig. 1 mit dem in einer Vorarretierstellung befindlichen Einsteckteil unter Druckbeaufschlagung zur Erläuterung des Leckagepfades,
- Fig. 3: eine weitere Darstellung analog zu Fig. 1 bzw. 2 einer Ausführungsvariante mit Verdrehsicherung des Einsteckteils in der ganz gesteckten und abgedichteten Vollsteckstellung,
- Fig. 4: eine Seitenansicht nur des Einsteckteils der Ausführung gemäß Fig. 1 bis 3,
- Fig. 5: eine Perspektivansicht einer zweiten Ausführungsform eines erfindungsgemäßen Steckverbinders (ohne Einsteckteil),
- Fig. 6: eine vergrößerte Längsschnittdarstellung des Steckverbinders gemäß Fig. 5 und
- Fig. 7: eine Darstellung analog zu Fig. 6 in einer Ausführungsvariante.

In den verschiedenen Figuren der Zeichnung sind gleiche Teile stets mit den gleichen Bezugszeichen versehen. Daher gilt jede Beschreibung eines Teils unter Bezugnahme auf eine bestimmte Zeichnungsfigur analog auch für alle anderen Zeichnungsfiguren, in denen das besagte Teil mit dem entsprechenden Bezugszeichen ebenfalls zu erkennen ist.

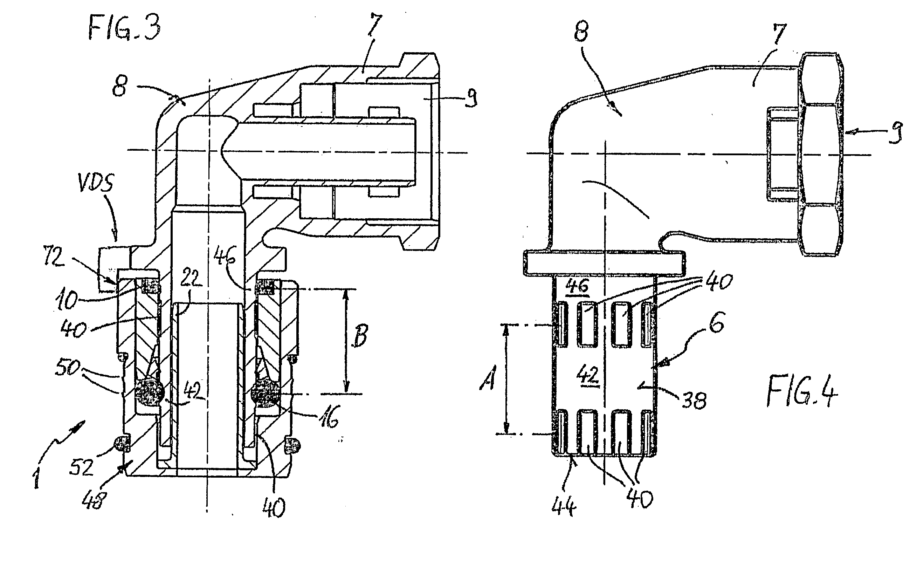

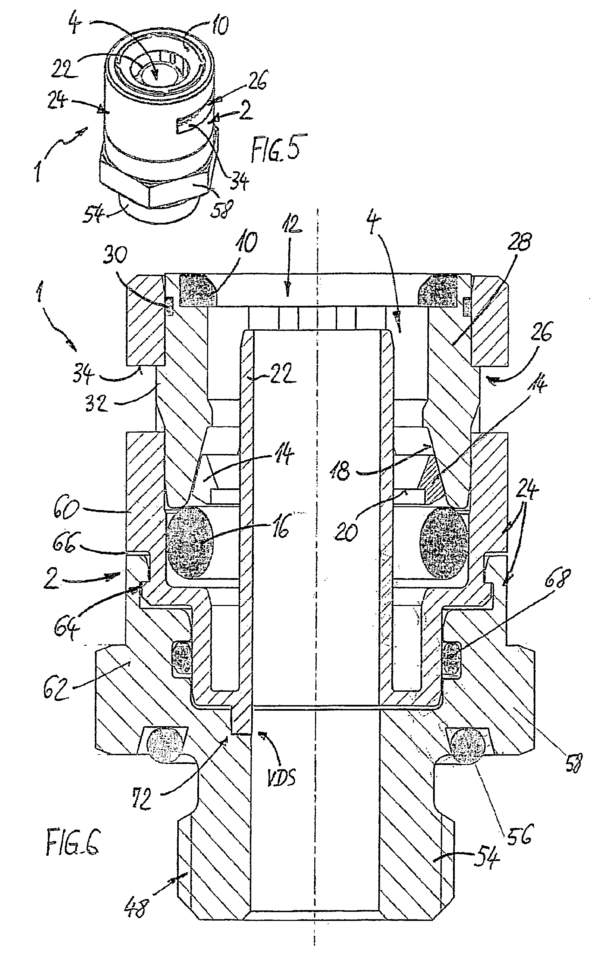

Ein erfindungsgemäßer Steckverbinder 1 besteht in allen Ausführungsbeispielen aus einem Gehäuseteil 2 mit (mindestens) einer Steckaufnahme 4 (siehe insbesondere Fig. 5 bis 7) zum axialen, mediendichten Einstecken eines rohrstückförmigen Einsteckteils 6 (siehe hierzu die gesonderte Darstellung in Fig. 4). Bei diesem Beispiel ist das Einsteckteil 6 als Abschnitt eines Verbinderstückes 8 ausgebildet, welches - wie dargestellt - beispielsweise als Winkelverbinder ausgeführt sein kann. Das Verbinderstück 8 kann auf seiner dem Einsteckteil 6 gegenüberliegenden Seite einen Verbindungsabschnitt 7 aufweisen, der analog zu dem Steckverbinder 1 bzw. dem Gehäuseteil 2 als gleichartige Steckaufnahme 9 ausgebildet sein kann. Bevorzugt wird das Verbinderstück 8 von einem einstückigen Formteil aus Kunststoff gebildet. Grundsätzlich ist der Steckverbinder 1 jedoch auch zum direkten Anschluß von Rohrleitungen geeignet, wobei dann das Einsteckteil 6 von einem Ende der Rohrleitung gebildet ist (nicht dargestellt).

Innerhalb der Steckaufnahme 4 sind ausgehend von einer mündungsseitigen Schmutzdichtung 10 in Einsteckrichtung (Pfeil 12) gesehen zunächst ein Halteelement 14 zum Arretieren des eingesteckten Einsteckteils 6 und in einem sich daran anschließenden Bereich eine Mediendichtung 16 (Druckdichtung) angeordnet. Die Schmutzdichtung 10 und die Mediendichtung 16 kommen unmittelbar zur umfangsgemäßen Anlage auf dem Außenumfang des eingesteckten Einsteckteils 6 (siehe Fig. 3). Das Halteelement 14 ist bevorzugt als geschlitzter und dadurch radial elastischer Klemmring ausgebildet, der zum Arretieren des Einsteckteils 6 so mit einem Innenkonus 18 in der Steckaufnahme 4 zusammenwirkt, dass er durch eine Bewegung entgegen der Einsteckrichtung 12 über den Innenkonus 18 radial nach innen zur klemmenden Halterung des Einsteckteils 6 verformt (verengt) wird. Dabei wirkt er mit mindestens einer radial nach innen ragenden, umlaufenden Zahnkante 20 gegen den Außenumgang des Einsteckteils 6. Dazu wird insbesondere auf die vergrößerte Darstellung in Fig. 6 verwiesen. Durch diese Ausgestaltung wird durch eine Bewegung des zuvor eingesteckten Einsteckteils 6 zurück in Löserichtung das Halteelement 14 bzw. der Klemmring zunächst durch kraftschlüssige Anlage seiner Zahnkante 20 mitgenommen, bis er mit seinem Außenkonus zur Anlage in dem Innenkonus 18 des Gehäuseteils 2 gelangt. Bei weitergehendem Zug wird über die Konen eine radial nach innen gerichtete Kraft erzeugt, durch die der Klemmring elastisch verengt wird, so dass die Zahnkante 20 kraft- und/oder formschlüssig mit dem im Wesentlichen glattflächigen, zylindrischen Außenumfang des Einsteckteils 6 zusammenwirkt und dieses so gegen Herausziehen arretiert wird.

In weiterer bevorzugter Ausgestaltung ist innerhalb des Gehäuseteils 2 eine zur Steckachse koaxiale Stützhülse 22 zum kraftschlüssigen, spielfreien Eingriff in das eingesteckte Einsteckteil 6 angeordnet. Die Stützhülse 22 stützt somit das aufgesteckte Einsteckteil 6 einerseits gegen die über das Halteelement 14 aufgebrachte Radialkraft und andererseits auch gegen die Anlagekraft der Mediendichtung 16 von innen her radial ab. Dadurch ist der erfindunsgemäße Steckverbinder 1 grundsätzlich auch für Schlauchleitungen geeignet.

Zum Zwecke der Herstellbarkeit bzw. Montierbarkeit des Steckverbinders 1 ist das Gehäuseteil 2 zweiteilig aus einem Basisteil 24 und einem mit diesem über eine schnappbare Formschlußverbindung 26 (formschlüssige Rastverbindung mit einem Wirkflächen-Hinterschneidungswinkel größer/gleich 90°; siehe dazu insbesondere Fig. 5 bis 7) verbundenen, den Innenkonus 18 aufweisenden Einsatzteil 28 ausgebildet.

Dabei weist das Einsatzteil 28 die Schmutzdichtung 10 zur umfangsgemäßen Anlage auf dem eingesteckten Einsteckteil 6 auf.

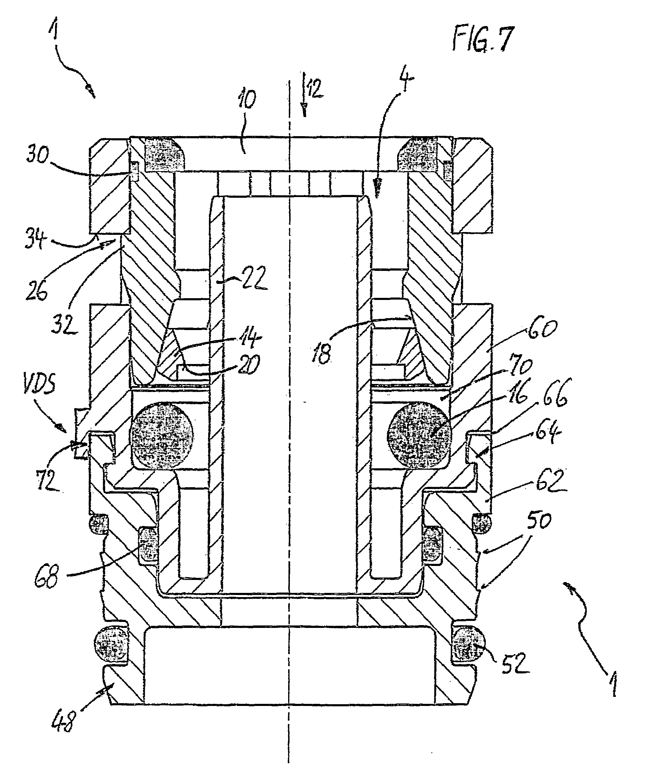

Das Einsatzteil 28 ist gemeinsam mit der Schmutzdichtung 10 als einstückiges Zweikomponenten-Formteil aus zwei unterschiedlichen Kunststoff-Materialien ausgebildet, und zwar besteht das Einsatzteil 28 aus einem ersten, relativ härteren und formstabilen Kunststoff, während die Schmutzdichtung 10 unmittelbar einstückig materialschlüssig aus einem zweiten, relativ weicheren und elastischen Kunststoff angeformt ist. Hierbei weist die Schmutzdichtung 10, siehe dazu insbesondere Fig. 6 und 7, auf ihrer radial nach innen weisenden Seite einen wulstartigen Dichtungsbereich zur umfangsgemäßen Auflage auf dem Einsteckteil 6 auf.

Das Einsatzteil 28 ist gemeinsam mit der Schmutzdichtung 10 insgesamt im Wesentlichen hülsenförmig ausgebildet und in eine Erweiterung der Steckaufnahme 4 des Basisteils 24 vorzugsweise mit Presspassung und dadurch zumindest gegen Eindringen von Schmutz und dergleichen Fremdstoffen dichtend eingesetzt bzw. einsetzbar. Es ist vorteilhaft, wenn das Einsatzteil 28 im eingesetzten Zustand mündungsseitig bündig abschließend vollständig innerhalb des Basisteils 24 liegt. Daraus resultiert eine kompakte Bauform des Steckverbinders 1, der mündungsseitig eine ebene, über die Schmutzdichtung 10 zum Einsteckteil 6 hin geschlossene Stirnfläche aufweist.

Bei der schnappbaren Formschlußverbindung 26 kann es sich um eine in Umfangsrichtgung umlaufende, geschlossene Ausführung von Rastelementen handeln (nicht dargestellt), was wegen des erreichten Formschlusses zu einer Unlösbarkeit des Einsteckteils 6 führt.

Im Gegensatz dazu ist allerdings bei den dargestellten Ausführungsformen zwecks Lösbarkeit des Einsteckteils 6 vorgesehen, dass das hülsenförmige Einsatzteil 28 mindestens zwei durch Längsschlitze gebildete, radialelastische Federarme aufweist (in den Zeichnungen nicht erkennbar). Jeder Federarm greift mit einem radial nach außen ragenden, nasenartigen Rastansatz 32 formschlüssig, d. h. mit Hinterschneidung größer/gleich 90°, in eine korrespondierende Rastöffnung 34 des Basisteils 24 lösbar ein (siehe Fig. 5 bis 7). Die Rastöffnungen 34 sind als radiale Durchgangsöffnungen ausgebildet, so dass die Rastansätze 32 zum Lösen von außen mit einem geeigneten Werkzeug erreicht und radial nach innen bewegt werden können, wodurch das Einsteckteil 6 gemeinsam mit dem Halteelement 14 und dem Einsatzteil 28 entnommen werden kann.

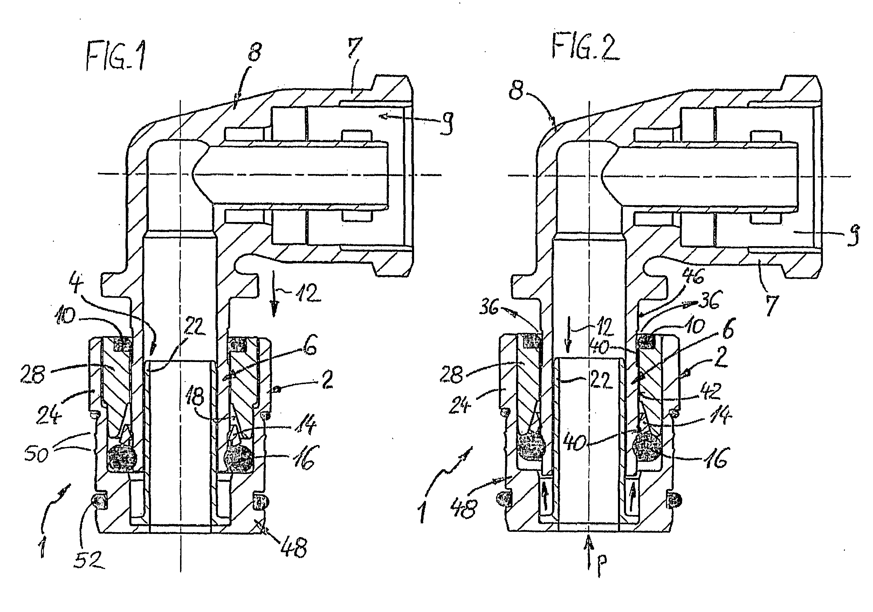

Aufgrund der beschriebenen Ausgestaltung und Anordnung des Halteelementes 14 und der Mediendichtung 16 arbeitet der erfindungsgemäße Steckverbinder 1 nach dem Steckprinzip "Halten vor Dichten", weil das Einsteckteil 6 beim Einstecken zunächst in den Bereich des Halteelementes 14 und erst danach in den Bereich der Mediendichtung 16 gelangt. Dadurch kann das Einsteckteil 6 bereits über das Halteelement 14 gegen Lösen arretiert werden, bevor die Verbindung über die Mediendichtung 16 abgedichtet ist. Aus diesem Grund ist ein Leckagepfad derart gebildet, dass in seiner solchen, durch das Halteelement 14 arretierten, aber noch nicht über die Mediendichtung 16 abgedichteten Vorarretierstellung des Einsteckteils 6 eine definiert begrenzte, physisch wahrnehmbare Undichtigkeit gewährleistet ist. Dies ist in Fig. 2 durch Pfeile 36 angedeutet.

Gemäß Fig. 1 bis 4 ist der Leckagepfad erfindungsgemäß durch auf dem Außenumfang 38 des Einsteckteils 6 angeordnete bzw. den zylindrischen Außenumfang 38 unterbrechende Vertiefungen 40 gebildet, siehe dazu insbesondere Fig. 4. Diese Vertiefungen 40 sind in der Vorarretierstellung (Fig. 2) einerseits im Bereich der Mediendichtung 16 und andererseits im Bereich der Schmutzdichtung 10 angeordnet. Im Falle einer Druckbeaufschlagung (Druck p) kann somit über den von den Vertiefungen 40 gebildeten Leckagepfad und damit an den Dichtungen 16, 10 vorbei das jeweilige Medium in Pfeilrichtung 36 entweichen, was sich durch ein Geräusch (zischen, pfeifen) bemerkbar macht.

Wie sich weiterhin aus Fig. 4 ergibt, sind die Vertiefungen 40 bevorzugt in zwei Gruppen zu je mehreren über den Umfang radialsymmetrisch verteilt angeordneten und axial über einen zylindrischen Mediendichtabschnitt 42 beabstandeten Vertiefungen 40 angeordnet. Jede Gruppe von Vertiefungen 40 besteht aus insbesondere etwa zehn bis fünfzehn, vorzugsweise z.B. zwölf Vertiefungen 40. An die von einem vorderen Einsteckende 44 des Einsteckteils 6 entfernt liegenden, der Schmutzdichtung 10 zugeordneten Vertiefungen 40 schließt sich auf der dem Mediendichtabschnitt 42 gegenüberliegenden Seite ein ebenfalls zylindrischer Schmutzdichtabschnitt 46 an. Die der Mediendichtung 16 zugeordneten Vertiefungen 40 gehen bevorzugt vom vorderen Einsteckende 44 des Einsteckteils 6 aus. Alle Vertiefungen 40 weisen bevorzugt jeweils eine in Einsteckrichtung 12 ausgerichtete längliche, insbesondere etwa rechteckige Form auf. Gemäß Fig. 3 und 4 entspricht der axiale Mittenabstand A der Vertiefungen 40 der beiden Gruppen zumindest annähernd dem axialen Abstand B zwischen Mediendichtung 16 und Schmutzdichtung 10.

Grundsätzlich kann der Steckverbinder 1 unmittelbarer Bestandteil eines beliebigen Aggregateteils, beispielsweise eines Ventilblocks, sein. In den dargestellten Ausführungen ist aber das Gehäuseteil 2 über (mindestens) einen Verbindungsabschnitt 48 mit einem weiteren beliebigen Aggregateteil (nicht dargestellt) verbindbar.

Bei den Ausführungen gemäß Fig. 1 bis 3 sowie 7 ist das Gehäuseteil 2 als Einpreßpatrone ausgebildet, wobei der als Einsteckabschnitt ausgebildete Verbindungsabschnitt 48 in eine Anschlußöffnung eines nicht dargestellten Aggregateteils einsetzbar (einpreßbar) ist. Bei der Anschlußöffnung kann es sich um eine einfache, glattwandige Bohrung handeln, wozu dann der Verbindungsabschnitt 48 zahnartige Halteelemente 50 sowie mindestens einen Dichtring 52 aufweist. Alternativ dazu ist bei der Ausführung gemäß Fig. 6 vorgesehen, dass der Verbindungsabschnitt 48 als Schraubgewindestutzen 54 ausgebildet ist. Dabei ist ein zusätzlicher Dichtring 56 insbesondere als Axialdichtung vorgesehen sowie zur Drehmomenteinleitung beim Verschrauben des Schraubgewindestutzen 54 ein Außensechskant 58.

Bei den Ausführungen gemäß Fig. 5 bis 7 ist dabei weiterhin vorgesehen, dass das Basisteil 24 nochmals zweiteilig aus einem Aufnahmeteil 60 für das Halteelement 14, die Mediendichtung 16 und für das Einsatzteil 28 sowie aus einem Anschlußteil 62 zur Anschlußverbindung des Gehäuseteils 2 besteht. Dazu weist das Anschlußteil 62 den oben erwähnten Verbindungsabschnitt 48 auf.

Durch diese Ausgestaltung kann vorteilhafterweise das Aufnahmeteil 60 mit einer stets gleichen Ausgestaltung wahlweise mit verschiedenen, adapterartigen Anschlußteilen 62 verbunden werden, so dass eine Art Baukastensystem geschaffen wird. Der Verbindungsbereich zwischen Aufnahmeteil 60 und Anschlußteil 62 ist dabei stets gleich ausgebildet, wohingegen der Anschlußbereich mit unterschiedlichen Verbindungsabschnitten 48 ausgeführt sein kann; vergleiche Fig. 6 und 7.

Vorzugsweise sind das Aufnahmeteil 60 und das Anschlußteil 62 über eine schnappbare Formschlußverbindung 64 insbesondere unlösbar miteinander verbunden. Dazu ist die Formschlußverbindung 64 mit einem umfangsgemäß geschlossenen Linienverlauf ausgebildet. Die Teile 60, 62 sind dadurch auf einfache Weise zusammensteckbar und verrastbar, nachfolgend aber nicht, jedenfalls nicht zerstörungsfrei trennbar. Zweckmäßig sind die Teile im Verbindungsbereich so ausgeführt, dass ihre äußeren Konturen axial über einen Spalt 66 fluchtend ineinander übergehen. In ihrem zusammengesteckten Bereich ist ein Ringspalt zwischen dem Aufnahmeteil 60 und dem Anschlußteil 62 über eine Dichtung 68 mediendicht abgedichtet.

Das Aufnahmeteil 60 besteht vorzugsweise aus Kunststoff, während das Anschlußteil 62 insbesondere aus Metall, beispielsweise Messing, besteht.

Die Mediendichtung 16 ist in einer inneren Ringkammer 70 angeordnet, die zwischen dem Basisteil 24 bzw. dem Aufnahmeteil 60 und dem Einsatzteil 28 gebildet ist.

Die oben erwähnte Stützhülse 22 kann mit Vorteil einstückig mit dem Aufnahmeteil 60 ausgebildet sein (Fig. 6 und 7). Bei der Ausführung gemäß Fig. 1 bis 3 ist die Stützhülse 22 als separates Teil in das Basisteil 24 eingesetzt.

In weiterer Ausgestaltung der Erfindung sind Mittel zur Sicherung des Einsteckteils 6 gegen Verdrehen um die Steckachse vorgesehen. Diese Mittel zur Verdrehsicherung sind in der Zeichnung mit VDS bezeichnet (siehe hierzu insbesondere die Fig. 3, 6 und 7). Diese Verdrehsicherung VDS ist insbesondere bei Winkelverbindern von Bedeutung (Richtungseinstellbarkeit). Die Mittel zur Verdrehsicherung VDS sind von Formschlußelementen 72 derart gebildet, dass die jeweiligen Einzelteile axial montierbar (zusammensteckbar), aber gegen Relativverdrehung formschlüssig gesichert sind. Einerseits ist das Einsteckteil 6 bzw. das Verbinderstück 8 über solche Formschlußelemente 72 mit dem Gehäuseteil 2 verbunden, wobei es sich gemäß Fig. 3 um einen das Gehäuse 2 übergreifenden Abschnitt des Einsteckteils 6 mit einem Sechskant- oder Vielzahneingriff handeln kann. Bei der zweiteiligen Ausführung des Basisteils 24 gemäß Fig. 6 und 7 muß auch zwischen dem Aufnahmeteil 60 und dem Anschlußteil 62 eine Verdrehsicherung durch entsprechende Formschlußelemente 72 vorgesehen sein. Gemäß Fig. 6 kann es sich um innere Formschlußelemente 72 handeln, die in einem inneren Einsteckbereich der beiden Teile 60, 62 angeordnet sind. Gemäß Fig. 7 handelt es sich um äußere übergreifende Formschlußelemente 72. Eine außenliegende Verdrehsicherung VDS läßt sich fertigungstechnisch leichter realisieren. Eine innenliegenden VDS hat den Vorteil einer sehr kompakten Bauweise ohne außen überstehende Teile. Bei der Ausführung des Gehäuses 2 als Einpreßpatrone (Fig. 1 bis 3 und 7) muß zusätzlich eine weitere, nicht dargestellte Verdrehsicherung VDS im Zusammenwirken mit dem jeweiligen Aggregateteil, insbesondere im Bereich des Verbindungsabschnittes 48 vorgesehen sein.

## Patentansprüche

1. Steckverbinder (1) für Medienleitungen, bestehend aus einem rohrstückförmigen Einsteckteil (6) und einem Gehäuseteil (2) mit einer Steckaufnahme (4) zum mediendichten Einstecken des Einsteckteils (6), wobei innerhalb der Steckaufnahme (4) ausgehend von einer mündungsseitigen Schmutzdichtung (10) in Einsteckrichtung (12) gesehen zunächst ein Halteelement (14) zum Arretieren des eingesteckten Einsteckteils (6) und daran anschließend eine Mediendichtung (16) angeordnet sind, wobei ein Leckagepfad derart gebildet ist, dass in einer durch das Halteelement (14) arretierten, aber noch nicht über die Mediendichtung (16) abgedichteten Vorarretierstellung des Einsteckteils (6) eine definiert begrenzte, physisch wahrnehmbare Undichtigkeit gewährleistet ist,
**dadurch gekennzeichnet, dass** derLeckagepfaddurchaufdem Außenumfang (38) des Einsteckteils (6) angeordnete Vertiefungen (40) gebildet ist, die in der Vorarretierstellung einerseits im Bereich der Mediendichtung (16) und andererseits im Bereich der Schmutzdichtung (10) angeordnet sind.

2. Steckverbinder nach Anspruch 1,
**dadurch gekennzeichnet, dass** die Vertiefungen (40) in zwei Gruppen zu je mehreren, über den Umfang verteilt angeordnet und axial über einen zylindrischen Mediendichtabschnitt (42) beabstandeten Vertiefungen (40) angeordnet sind.

3. Steckverbinder nach Anspruch 2,
**dadurch gekennzeichnet, dass** sich an die von einem vorderen Einsteckende (44) des Einsteckteils (6) entfernt liegenden, der Schmutzdichtung (10) zugeordneten Vertiefungen (40) auf der dem Mediendichtabschnitt (42) gegenüberliegenden Seite ein zylindrischer Schmutzdichtabschnitt (46) anschließt.

4. Steckverbinder nach einem der Ansprüche 1 bis 3,
**dadurch gekennzeichnet, dass** diederMediendichtung(16) zugeordneten Vertiefungen (40) vom vorderen Einsteckende (44) des Einsteckteils (6) ausgehen.

5. Steckverbinder nach einem der Ansprüche 1 bis 4,
**dadurch gekennzeichnet, dass** die Vertiefungen (40) jeweils eine in Einsteckrichtung (12) ausgerichtete längliche, insbesondere etwa rechteckige Form aufweisen.

6. Steckverbinder nach einem der Ansprüche 1 bis 5,
**dadurch gekennzeichnet, dass** der axiale Mittenabstand (A) der Vertiefungen (40) dem axialen Abstand (B) zwischen Mediendichtung (16) und Schmutzdichtung (10) zumindest annähernd entspricht.

7. Steckverbinder nach einem der Ansprüche 1 bis 6,
**dadurch gekennzeichnet, dass**
das Gehäuseteil (2) zweiteilig aus einem Basisteil (24) und einem mit diesem über eine schnappbare Formschlußverbindung (26) verbundenen Einsatzteil (28) besteht.

8. Steckverbinder nach Anspruch 7,
**dadurch gekennzeichnet, dass**
das Basisteil (24) seinerseits ebenfalls zweiteilig aus einem Aufnahmeteil (60) für das Halteelement (14), die Mediendichtung (16) und das Einsatzteil (28) sowie aus einem Anschlußteil (62) zur Anschlußverbindung des Gehäuseteils (2) an eine Medienleitung besteht.

9. Steckverbinder nach Anspruch 8,
**dadurch gekennzeichnet, dass** dasAufnahmeteil(60)unddas Anschlußteil (62) über eine - insbesondere umfangsgemäß geschlossene - schnappbare Formschlußverbindung (64) miteinander verbunden sind.

10. Steckverbinder nach Anspruch 8 oder 9,
**dadurch gekennzeichnet, dass** ein Ringspalt (66) zwischen dem Aufnahmeteil (60) und dem Anschlußteil (62) über eine Dichtung (68) mediendicht abgedichtet ist.

11. Steckverbinder nach einem der Ansprüche 8 bis 10,
**dadurch gekennzeichnet, dass** das Aufnahmeteil (60) mit einer stets gleichen Ausgestaltung wahlweise mit verschiedenen, adapterartigen Anschlußteilen (62) verbindbar ist.

12. Steckverbinder nach einem der Ansprüche 8 bis 11,
**dadurch gekennzeichnet, dass** dasAufnahmeteil(60)aus Kunststoff und das Anschlußteil (62) insbesondere aus Metall bestehen.

13. Steckverbinder nach einem der Ansprüche 1 bis 12,
**dadurch gekennzeichnet, dass** dasHalteelement(14)als geschlitzter, radialelastischer Klemmring ausgebildet ist, der zum Arretieren des Einsteckteils (6) mit einem Innenkonus (18) in der Steckaufnahme (4) zusammenwirkt.

14. Steckverbinder nach Anspruch 13 und einem der Ansprüche 7 bis 12,
**dadurch gekennzeichnet, dass** der Innenkonus (18) in dem Einsatzteil (28) gebildet ist.

15. Steckverbinder nach einem der Ansprüche 7 bis 14,
**dadurch gekennzeichnet, dass** dieMediendichtung(16)ineiner Ringkammer (70) zwischen dem Basisteil (24) bzw. dem Aufnahmeteil (60) und dem Einsatzteil (28) angeordnet ist.

16. Steckverbinder nach einem der Ansprüche 1 bis 15,
**gekennzeichnet durch** Mittel (VDS) zur Sicherung des eingesteckten Einsteckteils (6) gegen Verdrehen um die Steckachse.

17. Steckverbinder nach Anspruch 16,
**dadurch gekennzeichnet, dass** die Mittel zur Verdrehsicherung (VDS) von Formschlußelementen (72) derart gebildet sind, dass die Einzelteile axial montierbar, aber gegen Relatiwerdrehung gesichert sind.

## Claims

1. A plug connector (1) for fluid conduits, comprising a tubular plug-in part (6) and a housing part (2) having a plug receiving means (4) for fluid-tight insertion of the plug-in part (6), in which, arranged within the plug receiving means (4), starting from a mouth-side dirt seal (10) as seen in the insertion direction (12), there is firstly a retention element (14) for locking the inserted plug-in part (6) and, adjoining this, a fluid seal (16), a leak path being formed in such a way that, in a pre-locked position of the plug-in part (6), in which this is locked by the retention element (14) but not yet sealed by way of the fluid seal (16), a physically apparent leakage is ensured, which is restricted in defined manner,
**characterised in that** the leak path is formed by depressions (40) arranged on the outer circumference (38) of the plug-in part (6), which, in the pre-locked position, are arranged, on the one hand, in the region of the fluid seal (16) and, on the other, in the region of the dirt seal (10).

2. A plug connector according to Claim 1,
**characterised in that** the depressions (40) are arranged in two groups, each comprising a plurality of depressions (40) which are arranged distributed over the circumference and spaced axially over a cylindrical fluid-tight portion (42).

3. A plug connector according to Claim 2,
**characterised in that** a cylindrical dirt seal portion (46) adjoins the depressions (40) which are located distanced from a front plug-in end (44) of the plug-in part (6) and are associated with the dirt seal (10) on the side opposite the fluid-tight portion (42).

4. A plug connector according to one of Claims 1 to 3,
**characterised in that** the depressions (40) associated with the fluid seal (16) start from the front plug-in end (44) of the plug-in part (6).

5. A plug connector according to one of Claims 1 to 4,
**characterised in that** the depressions (40) each have an elongated, particularly approximately rectangular, form aligned in the plug-in direction (12).

6. A plug connector according to one of Claims 1 to 5,
**characterised in that** the axial centre spacing (A) of the depressions (40) corresponds at least approximately to the axial spacing (B) between the fluid seal (16) and the dirt seal (10).

7. A plug connector according to one of Claims 1 to 6,
**characterised in that** the housing part (2) comprises two parts consisting of a base part (24) and a plug-in part (28) connected to this base part by way of a snap-on form-fitting connection (26).

8. A plug connector according to Claim 7,
**characterised in that** the base part (24) in turn likewise comprises two parts consisting of a receiving part (60) for the retention element (14), the fluid seal (16) and the insert part (28) and a connection part (62) for attaching the housing part (2) to a fluid conduit.

9. A plug connector according to Claim 8,
**characterised in that** the receiving part (60) and the connection part (62) are connected to one another by way of a - particularly circumferentially closed - snap-on form-fitting connection (64).

10. A plug connector according to Claim 8 or 9,
**characterised in that** an annular gap (66) between the receiving part (60) and the connection part (62) is sealed in fluid-tight manner by way of a seal (68).

11. A plug connector according to one of Claims 8 to 10,
**characterised in that** the receiving part (60) with a consistently similar construction may be selectively connected to different adapter-type connection parts (62).

12. A plug connector according to one of Claims 8 to 11,
**characterised in that** the receiving part (60) is made of plastics material and the connection part (62) is particularly made of metal.

13. A plug connector according to one of Claims 1 to 12,
**characterised in that** the retention element (14) is constructed as a slotted, radially resilient clamping ring which cooperates with an inner cone (18) in the plug receiving means (4) for the purpose of locking the plug-in part (6).

14. A plug connector according to Claim 13 and one of Claims 7 to 12, **characterised in that** the inner cone (18) is formed in the insert part (28).

15. A plug connector according to one of Claims 7 to 14,
**characterised in that** the fluid seal (16) is arranged in an annular chamber (70) between the base part (24) or the receiving part (60) and the insert part (28).

16. A plug connector according to one of Claims 1 to 15,
**characterised by** means (VDS) for securing the inserted plug-in part (6) against rotation about the plug axis.

17. A plug connector according to Claim 16,
**characterised in that** the means for securing against rotation (VDS) are formed by form-fitting elements (72) in such a way that the individual parts may be mounted axially but are secured against relative rotation.

## Revendications

1. Raccord à emboîtement (1) pour conduites de fluide comprenant une partie emboîtable (6) en forme de tuyau et une partie boîtier (2) munie d'un logement à emboîtement (4) servant à emboîter de manière étanche aux fluides la partie emboîtable (6), un élément de retenue (14) servant d'abord à arrêter la partie emboîtable (6) emboîtée puis immédiatement après un joint d'étanchéité (16) étant tout d'abord disposés à l'intérieur du logement d'emboîtement (4), en partant d'un joint anti-salissures (10) situé côté ouverture dans le sens de l'emboîtement, un chemin de fuite étant formé de manière à ce que dans une position de pré-arrêt de la partie emboîtable (6) arrêtée par l'élément de retenue (14) mais pas encore étanchéifiée par le joint d'étanchéité (16), un défaut d'étanchéité limité de façon définie et perceptible physiquement soit garanti, **caractérisé en ce que** le chemin de fuite est formé par des cavités (40) disposées sur le pourtour extérieur (38) de la partie emboîtable (6), lesquelles sont disposées en position de pré-arrêt, d'une part, dans la zone du joint d'étanchéité (16) et d'autre part, dans la zone du joint anti-salissures (10).

2. Raccord à emboîtement selon la revendication 1,
**caractérisé en ce que** les cavités (40) sont disposées en deux groupes par rapport à plusieurs cavités (40) réparties sur le pourtour et espacées axialement par une section étanche (42) cylindrique.

3. Raccord à emboîtement selon la revendication 2,
**caractérisé en ce qu'**une section étanche anti-salissures(46) cylindrique est raccordée aux cavités (40) attribuées au joint anti-salissures (10), se trouvant éloignées d'une extrémité avant emboîtable (44) de la partie emboîtable (6) sur le côté opposé de la section étanche (42).

4. Raccord à emboîtement selon l'une quelconque des revendications 1 à 3,
**caractérisé en ce que** les cavités (40) attribuées au joint d'étanchéité (16) partent de l'extrémité avant emboîtable (44) de la partie emboîtable (6).

5. Raccord à emboîtement selon l'une quelconque des revendications 1 à 4,
**caractérisé en ce que** les cavités (40) présentent chacune une forme allongée orientée dans le sens de l'emboîtement (12), plus particulièrement quasi rectangulaire.

6. Raccord à emboîtement selon l'une quelconque des revendications 1 à 5,
**caractérisé en ce que** l'entraxe (A) des cavités (40) correspond au moins approximativement à l'entraxe (B) entre le joint d'étanchéité (16) et le joint anti-salissures (10).

7. Raccord à emboîtement selon l'une quelconque des revendications 1 à 6,
**caractérisé en ce que** la partie boîtier (2) en deux parties se compose d'une partie de base (24) et d'une partie insert (28) reliée à celle-ci via un raccord encliquetable par correspondance de forme (26).

8. Raccord à emboîtement selon la revendication 7,
**caractérisé en ce que** la partie de base (24), elle-aussi en deux parties, se compose d'une partie de réception (60) pour l'élément de retenue (14), le joint d'étanchéité (16) et la partie insert (28) ainsi que d'une partie de raccord (62) servant à raccorder la partie boîtier (2) à une conduite de fluide.

9. Raccord à emboîtement selon la revendication 8,
**caractérisé en ce que** la partie de réception (60) et la partie de raccord (62) sont reliées l'une à l'autre par le biais d'un raccord encliquetable par correspondance de forme (64), plus particulièrement fermé selon le pourtour.

10. Raccord à emboîtement selon la revendication 8 ou 9,
**caractérisé en ce qu'**une fente annulaire (66) située entre la partie de réception (60) et la partie de raccord (62) est rendue étanche aux fluides par un joint (68).

11. Raccord à emboîtement selon l'une quelconque des revendications 8 à 10,
**caractérisé en ce que** la partie de réception (60) avec une configuration toujours identique peut être raccordée au choix à différentes parties de raccord (62) de type adaptateur.

12. Raccord à emboîtement selon l'une quelconque des revendications 8 à 11,
**caractérisé en ce que** la partie de réception (60) est réalisée en matière plastique et la partie de raccord (62) plus particulièrement en métal.

13. Raccord à emboîtement selon l'une quelconque des revendications 1 à 12,
**caractérisé en ce que** l'élément de retenue (14) est conçu comme un anneau de serrage rainuré, élastique radialement qui co-agit avec un cône intérieur (18) dans le logement d'emboîtement (4) afin d'arrêter la partie emboîtable (6).

14. Raccord à emboîtement selon la revendication 13 et l'une quelconque des revendications 7 à 12,
**caractérisé en ce que** le cône intérieur (18) est formé dans la partie insert (28).

15. Raccord à emboîtement selon l'une quelconque des revendications 7 à 14,
**caractérisé en ce que** le joint d'étanchéité (16) est disposé dans une chambre circulaire (70) entre la partie de base (24) et/ou la partie de réception (60) et la partie insert (28).

16. Raccord à emboîtement selon l'une quelconque des revendications 1 à 15,
**caractérisé par** des moyens (VDS) servant à protéger la partie emboîtable (6) emboîtée contre des torsions autour de l'axe d'emboîtement.

17. Raccord à emboîtement selon la revendication 16,
**caractérisé en ce que** les moyens de protection anti-torsion (VDS) sont formés par des éléments de correspondance de forme (72) de sorte que chaque partie puisse être montée axialement mais protégée contre toute torsion relative.
